## Europäisches Patentamt
## European Patent Office
## Office européen des brevets

(19)

(11) Veröffentlichungsnummer: **0 111 081**
**B1**

(12) **EUROPÄISCHE PATENTSCHRIFT**

(45) Veröffentlichungstag der Patentschrift: **18.04.90**

(21) Anmeldenummer: **83109703.5**

(22) Anmeldetag: **24.06.80**

(60) Veröffentlichungsnummer der früheren Anmeldung nach Art. 76 EPÜ: **0 022 214**

(51) Int. Cl.⁵: **C 10 B 53/00,** C 10 B 57/06, C 02 F 11/10

(54) **Verfahren zur Pyrolyse von Abfallstoffen.**

(30) Priorität: **25.06.79 DE 2925620**
**20.12.79 DE 2951478**

(43) Veröffentlichungstag der Anmeldung:
**20.06.84 Patentblatt 84/25**

(45) Bekanntmachung des Hinweises auf die Patenterteilung:
**18.04.90 Patentblatt 90/16**

(84) Benannte Vertragsstaaten:
**AT BE CH DE FR GB IT LI NL SE**

(56) Entgegenhaltungen:
**AT-B- 346 997**
**DE-A-2 751 007**
**DE-A-2 950 324**
**DE-B-2 432 504**

**Chemie Ingenieur Technik, No. 5, Mai 1979**
**Kaminsky W. et al. "Technische Prototypen für die Altreifen- und Kunststoff-Pyrolyse" Seiten 419-429**

(73) Patentinhaber: **BKMI Industrieanlagen GmbH**
**Sapporobogen 6 - 8**
**D-8000 München 40 (DE)**

(72) Erfinder: **Schmidt, Rüdiger, Dr.**
**Am Waldrand 33**
**D-8000 München 70 (DE)**
Erfinder: **Steininger, Franz**
**Wilhelm-Busch-Strasse 8/IV**
**D-8000 München 71 (DE)**

(74) Vertreter: **Planker, Karl-Josef, Dipl.-Phys.**
**c/o BABCOCK-BSH AKTIENGESELLSCHAFT**
**Parkstrasse 29 Postfach 4 + 6**
**D-4150 Krefeld 11 (DE)**

Courier Press, Leamington Spa, England.

## Beschreibung

Die Erfindung betrifft ein Verfahren entsprechend dem einleitenden Teil des Anspruchs 1.

Es ist bereits ein Verfahren zur Pyrolyse von Müll bekannt (DE—A1—2 751 007), bei dem der Müll in einem indirekt beheizten Drehrohrofen unter weitgehendem Luftabschluß bei einer Temperatur zwischen 450 und 650°C verschwelt wird. Ein solches Verfahren wirft besondere Probleme auf, wenn die Abfallstoffe einen beträchtlichen Gehalt an halogenhaltigen und/oder schwefelhaltigen Bestandteilen besitzen. Wegen des hohen Schadstoff- und Staubgehaltes der Pyrolysegase ist ihre unmittelbare Verwertung zur indirekten Beheizung des Drehrohrofens nicht möglich. Der Drehrohrofen muß dann vielmehr entweder durch eine Fremdwärmequelle beheizt werden oder das Pyrolysegas muß nach Ableitung aus dem Drehrohrofen kondensiert und anschließend einer Wäsche unterzogen werden, was die Energie- und Anlageksoten des Verfahrens beträchtlich vergrößert. Dazu kommt als weiterer Nachteil, daß durch den Kondensationsschritt die fühlbare Wärme des Pyrolysegases verloren geht; zudem führt die Kondensation der Pyrolysegase zu beträchtlichen Abwasserproblemen.

Durch die DE—B2 432 504 ist es bereits bekannt, Abfallstoffe in einer durch einen Drehrohrofen gebildeten Schwelzone bei Temperaturen zwischen 300 und 600°C zu verschwelen, die Pyrolysegase nach Umsetzung in hochwertige Brenngase in einer Brennkraftmaschine zu Rauchgasen zu verbrennen und die Rauchgase zur indirekten Beheizung der Schwelzone zu verwenden. Die Anwesenheit halogenhaltiger und/oder schwefelhaltiger, beim Schwelprozeß als gasförmige saure Schadstoffe freiwerdender Bestandteile bleibt in dieser Schrift unberücksichtigt.

Zur Aufarbeitung von Säureteer ist ferner ein Verfahren bekannt (AT—B—346 997), bei dem der zu einem wesentlichen Teil (beispielsweise 50 Gew.-%) aus Schwefelsäure bestehende Säureteer mit Oxiden, Hydroxiden oder Carbonaten der Erdalkalien, z.B. mit Kalk, versetzt wird. Das bei dieser Neutralisationsreaktion erhaltene Reaktionsprodukt wird anschließend einer mehrstufigen Wärmebehandlung unterworfen, wobei als erste Stufe eine Schwelbehandlung in einem Drehrohrofen bei 350 bis 500°C erfolgt, die gasförmigen Schwelprodukte anschließend einer Verbrennungskammer zugeleitet und die Verbrennungsabgase in einen Kamin entlassen werden.

Der Erfindung liegt die Aufgabe zugrunde, ein Verfahren gemäß dem einleitenden Teil des Patentanspruchs 1 anzugeben, bei dem durch Einbindung beim Schwelprozeß freiwerdender halogenhaltiger und/oder schwefelhaltiger Bestandteile die Korrosionsgefahr soweit vermindert wird, daß verhältnismäßig billige Materialien für alle mit dem Pyrolysegas in Berührung kommenden Anlagenteile verwendet werden können. Dadurch sollen die Anlagekosten minimiert werden.

Diese Aufgabe wird erfindungsgemäß durch die kennzeichnenden Merkmale des Anspruchs 1 gelöst.

Durch die Zugabe der feinkörnigen basischen Materialien wird ferner der Staubgehalt der Pyrolysegase wesentlich verringert. Der Grund hierfür besteht in der Veränderung der Kornform der Schwelkokspartikel durch die Zugabe der feinkörnigen basischen Materialien. Es ergeben sich hierdurch beim Schwelprozeß kompaktere Schwelkokspartikel mit relativ hohem spezifischen Gewicht, die sich beim Austrag aus der Schwelzone leichter vom Pyrolysegas trennen.

Die gleichzeitige Verringerung des Schadstoffgehaltes und des Staubaustrages durch die Zugabe der basischen Materialien zu den Abfallstoffen macht es möglich, entweder die Pyrolysegase insgesamt direkt zu Rauchgasen zu verbrennen und einen Teil dieser Rauchgase zur indirekten Beheizung der Schwelzone zu verwenden oder einen Teil der Pyrolysegas zur indirekten Beheizung der Schwelzone zu benutzen und den Rest der Pyrolysegase zu Rauchgasen zu verbrennen.

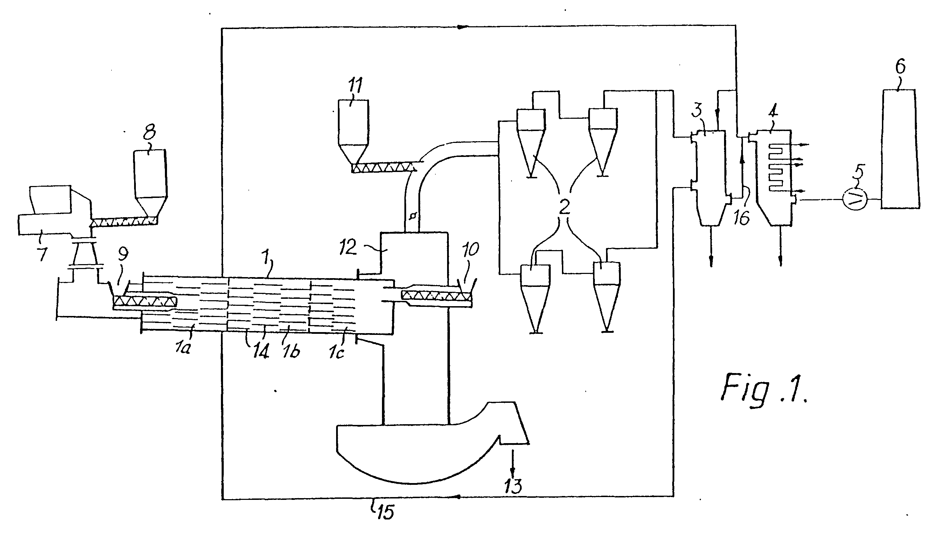

In den Fig. 1 bis 4 der Zeichnung sind vier Ausführungsbeispiele von Anlagen zur Durchführung des erfindungsgemäßen Verfahrens schematisch veranschaulicht.

Die Anlage gemäß Fig. 1 enthält im wesentlichen einen die Schwelzone bildenden Drehrohrofen 1, einen von vier Zyklonen gebildeten Staubabscheider 2, eine Brennkammer 3, einen Wärmetauscher 4, ein Saugzuggebläse 5 und einen Kamin 6.

Die Aufgabe der Abfallstoffe erfolgt über eine Aufgabeeinrichtung 7. Die Zugabe der feinkörnigen basischen Materialien geschieht über Aufgabeeinrichtungen 8, 9, 10 und 11. Über die Aufgabeeinrichtung 8 wird der größte Teil der feinkörnigen basischen Materialien den Abfallstoffen vor dem Schwelprozeß zugegeben. Die Aufgabeeinrichtungen 9 und 10 führen eine weitere Teilmenge der feinkörnigen basischen Materialien pneumatisch von beiden Stirnseiten her in den Drehrohrofen 1 ein. Die Augabeeinrichtung 11 führt eine weitere Teilmenge feinkörniger basischer Materialien unter Einsatz einer mechanischen Verteilvorrichtung in das Pyrolysegas ein, das vom Austragsgehäuse 12 des Drehrohrofens 1 zum Staubabscheider 2 strömt, wobei die Abscheidung der Feststoffteilchen aus dem Pyrolysegas sowohl im Staubabscheider als auch im Austragsgehäuse selbst vor sich gehen kann. Der Schwelkoks wird bei 13 abgezogen. Der Drehrohrofen 1 ist mit hubschaufelartigen Einbauten 14 versehen.

Bei der Anlage gemäß Fig. 1 werden die im Staubabscheider 2 von mitgeführtem Staub befreiten Pyrolysegase sowie die darin enthaltenen Pyrolysekondensate in der Brennkammer 3 zu Rauchgasen verbrannt. Die Rauchgase 15 werden zur indirekten Beheizung des die Schwelzone bildenden Drehrohrofens 1 verwendet und dann entweder dem Wärmetauscher 4 oder zumindest zum Teil der Brennkammer 3 zugeführt, um durch den Zusatz dieser abgekühlten Rauchgase die Verbrennungstemperatur der Pyrolyse-Rauchgase ohne erhöhte Luftzuführung steuern zu können. Ein weiterer Teil 16 der Rauchgase wird unmittelbar dem Wärmetauscher 4 zugeleitet. Der Wärmetauscher 4 kann beispielsweise ein zur Dampferzeugung dienender Kessel sein. Die Rauchgase werden nach Verdichtung durch das Saugzuggebläse über den Kamin 6 abgeführt.

Der Drehrohrofen 1 kann drei durch gesonderte Heizkammern unterschiedlich beheizte Zonen 1a, 1b und 1c aufweisen, von denen die zur Trocknung der Abfallstoffe dienende erste Zone eine Ofenaußenwandtemperatur zwischen 450 und 700°C aufweist, die anschließende, zur bevorzugten Verschwelung der Abfallstoffe bestimmte zweite Zone 1b eine gegenüber der ersten Zone 1a niedrigere Ofenaußenwandtemperatur zwischen 200 und 550°C und die zur Restentgasung der Abfallstoffe dienende dritte Zone 1c eine gegenüber der zweiten Zone 1b höhere Ofenaußenwandtemperatur zwischen 450 und 700°C.

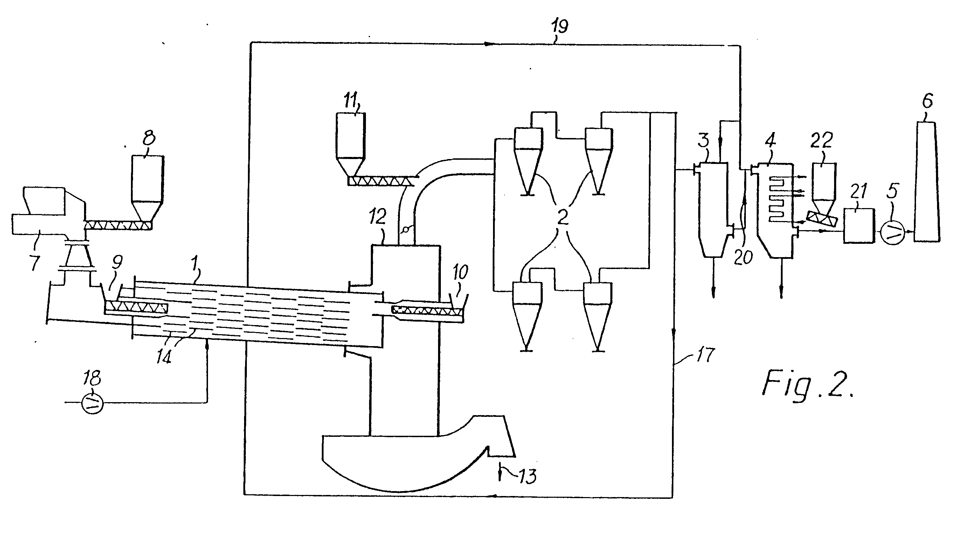

Die Anlage gemäß Fig. 2 wird nur insoweit erläutert, als sie von der Anlage gemäß Fig. 1 abweicht. Ein Teil 17 der aus dem Staubabscheider 2 austretenden Pyrolysegase wird hierbei zur indirekten Beheizung des Drehrohrofens 1 verwendet, dem zu diesem Zweck über ein Gebläse 18 die zur Verbrennung der Pyrolysegase erforderliche Frischluft zugeführt wird. Die hierbei entstehenden Abgase 19 werden dem Wärmetauscher 4 zugeleitet, dem außerdem die aus der Brennkammer 3 austretenden Rauchgase 20 zugeleitet werden.

Die aus dem Wärmetauscher 4 austretenden Rauchgase werden vor Eintritt in einen Filter 21 einer trockenen Rauchgassorption unterworfen, indem durch eine Aufgabeeinrichtung 22 basisches Material, wie Kalk, in den Strom der Rauchgase eingeführt wird.

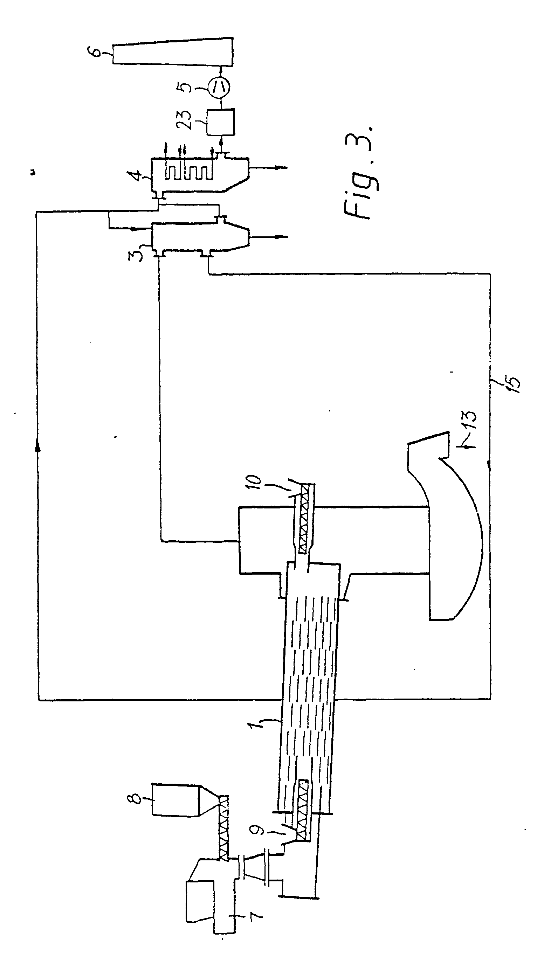

Bei der Anlage gemäß Fig. 3 erfolgt eine Zugabe feinkörniger basischer Materialien lediglich über die Aufgabeeinrichtung 8 (vor dem Schwelprozeß) und über die Aufgabeeinrichtungen 9 und 10 (während des Schwelprozesses). Die Pyrolysegase werden hier von der Schwelzone Drehrohrofen 1) unmittelbar, ohne Zwischenentstaubung, der Brennkammer 3 zugeleitet. Nach Ausnutzung der fühlbaren Wärme der Rauchgase im Wärmetauscher 4 werden die Rauchgase durch einen Wäscher 23 geführt, im Saugzuggebläse 5 verdichtet und über den Kamin 6 in die Atmosphäre entlassen.

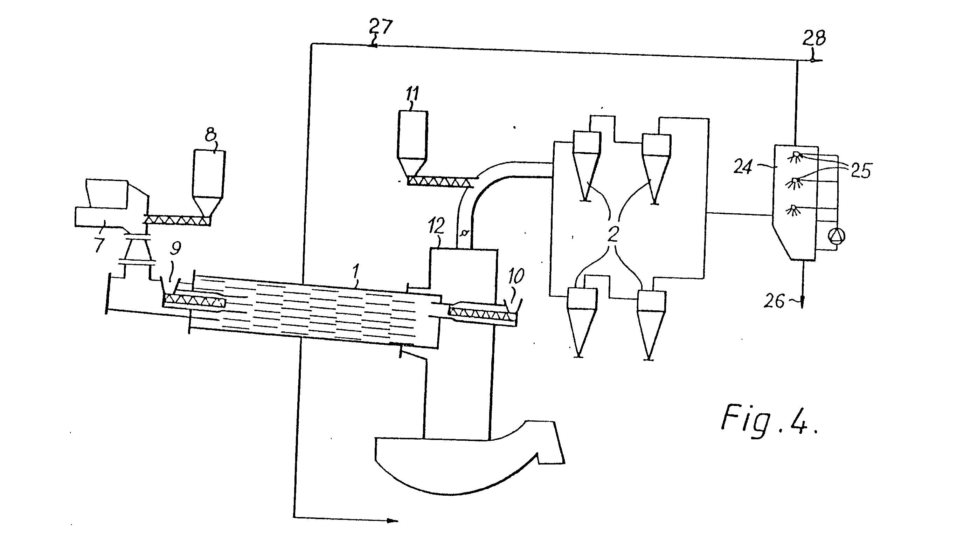

Bei der Anlage gemäß Fig. 4 werden die Pyrolysegase nach Austritt aus dem Staubabscheider 2 in einer Einrichtung 24 einer Ölquenchung unterworfen. In der Einrichtung 24 wird ein Thermoöl über Düsen 25 eingedüst. Das dabei entstehende Pyrolyseöl wird bei 26 abgezogen. Von dem aus der Einrichtung 24 austretenden Pyrolysegas wird ein Teil 27 zur indirekten Beheizung des Drehrohrofens 1 verwendet (wobei die fühlbare Wärme dieses Gasstromes anschließend weiter ausgenutzt werden kann), während ein weiterer Teil 28 einer anderen Verwendung zugeführt werden kann.

## Patentansprüche

1. Verfahren zur Pyrolyse von Abfallstoffen mit halogenhaltigen und/oder schwefelhaltigen Bestandteilen, die beim Schwelprozeß als gasförmige saure Schadstoffe frei werden, wobei

a) die Abfallstoffe in einer durch einen Drehrohrofen gebildeten Schwelzone bei einer Temperatur zwischen 300 und 600°C verschwelt werden,

b) die Pyrolysegase zu Rauchgasen verbrannt werden und

c) die Rauchgase zur indirekten Beheizung der Schwelzone verwendet werden,

dadurch gekennzeichnet, daß zur Einbindung der beim Schwelprozeß frei werdenden gasförmigen sauren Schadstoffe feinkörnige basische Materialien wie Calciumhydroxid, Calciumkarbonat und/oder Calciumoxid, in einem überstöchiometrischen Verhältnis—bezogen auf den Halogen- und/oder Schwefel gehalt der Abfallstoffe——zugegeben und durch die Umwälzbewegung in der Schwelzone mit den Abfallstoffen in trockenem Zustand vermischt werden.

2. Verfahren nach Anspruch 1, dadurch gekennzeichnet, daß ein Teil der zur indirekten Beheizung der Schwelzone verwendeten Rauchgase zwecks Regelung der Temperatur ohne Zuführung von zusätzlicher Verbrennungsluft wieder der Brennzone zugeführt wird.

3. Verfahren nach Anspruch 1, dadurch gekennzeichnet, daß der Drehrohrofen drei in Bewegungsrichtung der Abfallstoffe aufeinanderfolgende, unterschiedlich beheizte Zonen aufweist, von denen die erste, zur Trocknung der Abfallstoffe dienenden Zone eine Ofenaußenwandtemperatur zwischen 450 und 700°C, die zweite, zur bevorzugten Verschwelung der Abfallstoffe bestimmte Zone eine gegenüber der ersten Zone niedrigere Ofenaußenwandtemperatur zwischen 300 und 550°C und die dritte, zur Restentgasung der Abfallstoffe dienende Zone eine gegenüber der zweiten Zone höhere Ofenaußenwandtemperatur zwischen 450 und 700°C aufweist.

4. Verfahren nach Anspruch 3, dadurch gekennzeichnet, daß die zur indirekten Beheizung des Drehrohrofens verwendeten Rauchgase bzw. Pyrolysegase zunächst der ersten und dritten Zone und erst dann der zweiten Zone zugeführt werden.

## Revendications

1. Procédé pour la pyrolyse de résidus contenant des matières soufrées et/ou halogénées, qui se dégagent à la carburation à basse température sous forme de matières nocives gazeuses,

a) les résidus étant carburés à une température entre 300 et 600°C dans la zone de carburation formée par un four rotatif,

b) les gaz de pyrolyse étant brûlés en fumées et

c) les fumées étant récupérées pour le chauffage indirect de la zone de carburation,

caractérisé par le fait que des matières basiques de fine granulométrie, comme l'hydroxyde de calcium, le carbonate de calcium et/ou l'oxyde de calcium sont ajoutées aux résidus, dans un rapport surstoechiométrique par rapport à leur teneur en halogènes et/ou en soufre, et mélangées avec eux à l'état sec par le mouvement rotatif dans la zone de carburation pour lier les matières acides nocives gazeuses dégagées par le procédé de carburation.

2. Procédé selon la revendication 1 caractérisé par le fait que, pour régler la température, une partie des fumées récupérées pour le chauffage indirect de la zone de carburation est réintroduite dans la zone de combustion sans addition d'air de combustion supplémentaire.

3. Procédé selon la revendication 1 caractérisé par le fait que le four rotatif comprend, dans le sens de l'avancement des résidus, trois zones chauffées différemment, dont la première, servant au séchage des résidus, présente une température de la paroi extérieure entre 450 et 700°C, la seconde, destinée essentiellement à la carburation, une température inférieure à celle de la première se situant entre 300 et 550°C et la troisième, pour le dégazage final des résidus, une température plus élevée que à la seconde se situant entre 450 et 700°C.

4. Procédé selon la revendication 3 caractérisé par le fait que les fumées ou les gaz de pyrolyse récupérés pour le chauffage indirect du four rotatif sont d'abord amenés à la première et la troisième zone avant d'être introduits dans la deuxième zone.

**Claims**

1. Process for the pyrolysis of waste materials with halogenated and/or sulphurous components released during the low-temperature carbonization process as gaseous, acidic pollutants,

a) the waste materials being subjected to low-temperature carbonization at a temperature between 300 and 600°C in a low-temperature carbonization zone formed by a rotary kiln,

b) the pyrolysis gases being combusted to form flue gases

c) the flue gases being utilized for indirect heating of the low-temperature carbonization zone,

characterized by the fact that for the retention of the gaseous, acidic pollutants released during the low-temperature carbonization process fine-grained alkaline materials such as calcium hydroxide, calcium carbonate and/or calcium oxide are added in an above-stoichiometric ratio—based on the halogen and/or sulphur content of the waste materials—are added and are mixed with the waste materials in the dry state by means of the circulation movement in the low-temperature carbonization zone.

2. Process according to claim 1, characterized by the fact that part of the flue gases used for indirect heating of the low-temperature carbonization zone are returned to the combustion zone for the purpose of controlling the temperature without the feeding-in of additional combustion air.

3. Process according to claim 1, characterized by the fact that the rotary kiln shows three zones heated in different ways and arranged one after the other in the direction of the movement of the waste materials, of which the first zone, used for the drying of the waste materials, shows an outer kiln wall temperature between 450 and 700°C, the second zone, intended for preferential low-temperature carbonization of the waste materials, showing an outer kiln wall temperature, lower than that of the first zone, of between 300 and 550°C and the third zone, used for the residual degasification of the waste materials, showing an outer kiln wall temperature, higher than that of the second zone, of between 450 and 700°C.

4. Process according to claim 3, characterized by the fact that the flue gases or pyrolysis gases used for indirect heating of the rotary kiln are first fed into the first and third zones and only then into the second zone.

Fig .1.

EP 0 111 081 B1

Fig. 2.

EP 0 111 081 B1

Fig . 3.

EP 0 111 081 B1

Fig. 4.